# EUROPEAN PATENT SPECIFICATION

(11) **EP 0 448 599 B1**
(45) Date of publication and mention of the grant of the patent: **02.02.1994**
(21) Application number: 90900397.2
(22) Date of filing: 12.12.1989
(51) Int. Cl.: C08H 5/04, D21C 11/00

(54) **A LIGNIN PREPARATION AND A METHOD FOR ITS MANUFACTURE**
LIGNINZUBEREITUNG UND VERFAHREN ZUR HERSTELLUNG
PREPARATION DE LIGNINE ET SON PROCEDE DE FABRICATION

(30) Priority: 12.12.1988 SE 8804477
(43) Date of publication of application: 02.10.1991
(73) Proprietor: LignoTech Sweden AB, S-468 82 Vargön (SE)
(72) Inventor: AARSRUD, Wilhelm, S-462 36 Vänersborg (SE); BERGSTRÖM, Hans, S-462 55 Vänersborg (SE); FALKEHAG, Ingemar, Charleston, SC 29402 (US)
(74) Representative: Hagen, Sigurd Normann
(86) International application number: SE8900725
(87) International publication number: WO9006964

(56) References cited:
- SE-A- 361 688
- SE-A- 4 534 08

## Description

The present invention relates to a lignin preparation and to a method for its manufacture, in accordance with the preambles of respective Claims 1 and 7.

Lignin is obtained as a secondary product when producing pulp in accordance with an alkali delignification process such as the sulphate process, soda process or polysulphide process. When wood is cooked in accordance with one of these processes, so-called black liquor is obtained, which contains the lignin removed from the wood during digestion. When practising known techniques, the lignin is precipitated from the black liquor, by acidification and the precipitate is extracted by filtration. The filtrate is returned to the recycling system of the pulp mill.

The present invention is directed to lignin obtained by any of said processes, although primarily lignin obtained in the sulphate process.

The lignin removed from the system can be used as fuel, or as a starting material in the manufacture of chemical or chemitechnical products. Lignin which is extracted by separation processes that are run on an industrial scale will contain 1-1.5% by weight sulphur and often up to 4% by weight sodium. The sodium content often has a negative influence on the sintering properties of the ash that is obtained when burning the lignin, which makes rational handling of the ash difficult. Consequently, it is desirable to be able to raise the melting point of the ash, so as to avoid the occurrence of incrustations and deposits when burning the lignin, or rather when burning the precipitated and extracted lignin preparation.

When such industrially produced lignin, or lignin preparation, is burned as fuel for instance, the flue gases generated will contain sulphur dioxide, which is likely to be further oxidized in the atmosphere and therewith constitute a load on the environment, through acid precipitation.

An object of the present invention is to provide a lignin fuel with which the ash formed will have an elevated melting point, and a further object is to provide a method for the manufacture of such a lignin-based fuel.

Furthermore, when burning the inventive lignin preparation, the sulphur present is bound chemically, so as to capture sulphur dioxide and therewith reduce the threat to the environment from this source.

These objects are achieved in accordance with the invention, primarily by eliminating or significantly reducing the sodium content of the lignin present in the black liquor by replacing a major part of the sodium present with calcium.

The invention is directed in particular to a lignin preparation containing predominantly lignin and obtained by precipitation from black liquor which derives from an alkali delignification process, selected from the sulphate process, soda process or polysulphide process, said lignin preparation being characterized in that the original sodium content of the lignin has been reduced so as to be less than 2% by weight, preferably less than 1% by weight, calculated on the dry weight of the lignin, whereby the sodium removed from the lignin has been replaced with calcium, so that the calcium content of the lignin exceeds 2% by weight, and preferably exceeds 3% by weight, calculated on the dry weight of the lignin. As an example the sodium content is 1.2-0.2% by weight, while the calcium content is at least 3% by weight.

According to one embodiment of the invention, the lignin preparation contains acid components originating from kaolin, silicon dioxide, aluminium oxide, slag and ash of an acid nature. Preferably kaolin, which is present in a quantity of 5-50% by weight, preferably 5-30% and especially in a quantity of 15% by weight, calculated on the ash obtained when burning the preparation.

The lignin preparation has a sintering temperature exceeding 1000°C, preferably exceeding 1100°C.

In the method to provide the lignin preparation of the invention, lignin derived from an alkali delignification process, selected from the sulphate process, soda process or polysulphide process, is extracted by precipitation from black liquor deriving from one of said processes and the lignin precipitate is separated from the black-liquor residue by filtration. In the method, at least the major part of the sodium content of the lignin is removed by washing down to a pH beneath 9, preferably down to a pH of 7-9, with an acid, selected from the sulphuric acid, residual acid from ClO₂-preparation or sulphur-dioxide water, capable of forming a soluble calcium salt, with the proviso that a calcium compound is added to the black liquor prior to or during said precipitation process or to the lignin precipitate or while washing the filter cake, or subsequent to removal of the filtrate or the calcium compound is admixed with the lignin subsequent to the filtering and washing process, so as to replace the sodium removed from the lignin with calcium.

According to one embodiment of the invention, the calcium compound is calcium carbonate and according to another embodiment, the washing of the lignin with the acid is performed down to a pH beneath pH 8, so as to remove sodium, and then the water-soluble calcium compound is added subsequent thereto.

According to still another embodiment, the washing of the lignin is made down to a pH beneath 4, and subsequently calcium carbonate is admixed with the slurried filter cake.

According to still another embodiment of the invention, an acid compound containing silica, aluminium oxide, slag or ash of an acid nature, is added in addition to said calcium compound.

As already mentioned, the lignin preparation can successfully be used as a fuel, possibly together with other sulphur-containing fuels, for the purpose of reducing the sulphur content of the ensuing flue gases.

As before mentioned, it is known to remove lignin from black liquor. For instance, SE 8402753-1 teaches a method in which lignin is precipitated from black liquor by introducing carbon dioxide thereinto. The lignin precipitate is separated from the liquor, together with other organic substances present therein, by filtration and is homogenized to form a suspension, which is then used as a fuel source within the mill.

SE-A-361 688 (= CA-A-1 014 304) discloses a method of operating a plant of cellulose pulp by the sulphate process with the purpose of reducing the emission of sulphur containing gases in combustion of waste liquor (black liquor) from the pulp production, wherein the black liquor is concentrated by evaporation and then passed to a combustion zone, where the lignin portion is burned. The process is characterized in controlling the sulphur to alkali ratio in the black liquor prior to the combustion zone by adding white liquor from the causticizing department of the plant to maintain a defined sulphur/alkali ratio during combustion.

No precipitation process of lignin from black liquor and also no substitution of calcium for sodium in the lignin is disclosed.

Lignin which is separated from black liquor on an industrial scale with the aid of known techniques will contain significant quantities of sodium and sulphur, and consequently will have the aforesaid drawbacks when used as a fuel source.

With the intention of enabling a lignin preparation obtained from black liquor to be used as fuel, which preparation may also contain organic substances other than lignin, a primary object of the present invention is to elevate the melting point of the ash formed by combustion of the fuel, so as to prevent the ash from melting during said combustion and therewith to enable the ash to be handled in a suitable manner. The sodium present in the ash has a negative influence in this respect and will lower the melting point of the ash. Consequently, in accordance with the invention, a first procedure is to treat the lignin so as to reduce its sodium content. This can be achieved with the aid of various washing processes, as will be explained in more detail here-below. In accordance with the invention, a second procedure is to replace the sodium present in the lignin with a substance which will elevate the melting point of the ash. Calcium is an example of one such substance. According to an embodiment of the invention, in which the melting point of the ash is further elevated, other substances, which contain preferably acid components, such as kaolin, silicon dioxide aluminium oxide, slag and ash of an acid nature are added to the system.

A further object of the invention is to eliminate, or at least reduce, the presence of sulphur dioxide in the flue gases generated when burning the lignin preparation. Calcium is a substance which will bind sulphur when burning sulphur-containing fuels, so as to reduce the sulphur content of the flue gases. It has been possible to reduce the sulphur content of combustion gases by up to 90%, when calcium is added in a molar ratio Ca/S of about 2. When burning lignin in which the sodium content thereof, about 4% by weight, has been replaced with calcium, there is achieved an at least 60% reduction in the sulphur content of the combustion gases.

Another advantage afforded by the lignin preparation produced in accordance with the invention is that it is effective in reducing the sulphur content of the flue gases generated when the lignin is burned together with other sulphur-containing fuels, such as coal for instance. It is well known that sulphur dioxide will form in flue gases generated when burning coal, this sulphur dioxide constituting an environmental hazard, as beforementioned. Various systems for reducing the sulphur content of flue gases are known to the art. According to one known method, an approximate 40% reduction in sulphur content is achieved by introducing a calcium compound in the form of a particle dispersion. This method is thus not too successful. Furthermore, the method incurs additional costs in the provision of apparatus which will produce "spray mists", compressors, etc.. Naturally, such additional costs are undesirable. By using a lignin preparation that has been produced in accordance with the present invention and which thus has a higher calcium content than that required to reduce the intrinsic sulphur content thereof, it is possible, when burning the lignin together with coal for instance, to reduce the sulphur content of the flue gases to a far greater extent and in a cheaper and more effective manner than when applying known techniques.

The present invention thus relates to a method for obtaining from an alkali delignification process such as the sulphate, soda or polysulphide process a fuel which is beneficial from the aspect of environmental safety and also from the aspect of combustion.

As beforementioned, according to a first embodiment of the invention there is formed a lignin fuel whose melting point has been raised by reducing the sodium content of the lignin. Although this reduction in sodium content can be achieved in various ways, it is preferred to achieve this reduction by treating the lignin cake with an acid, such as to remove the sodium ions from the lignin. A reduction of the sodium content down to 0.1% is possible when proceeding in this manner. The melting point of the ash can be elevated still further, by adding acid components containing silica or aluminium to the system. These two latter procedures will result in a total elevation of the melting point to above 1000°C, preferably above 1100°C. As before-mentioned, according to the invention, the melting temperature of the ash is further elevated by ion exchange, in which the sodium ions are replaced with calcium ions, this substitution also affording the advantage of reducing the sulphur content of the flue gases generated when burning such lignin preparations.

Calcium can, in principle, be introduced during different stages of the lignin-recovery process. Thus, the following alternative procedures can be applied when practising the present invention:
1 A calcium compound is added to the black liquor, prior to or during precipitation of the lignin.
2 A calcium-containing compound is added to the lignin precipitate.
3 A calcium compound is added while washing the filter cake, subsequent to isolating the filtrate.
4 A calcium compound is admixed with the lignin obtained subsequent to the filtering and washing process, wherein water can be added at the same time, depending on the desired physical form of the lignin, e.g. to produce a slurry.
5 A calcium compound is added to the filter cake, as in alternative 5 above, but is accompanied by acidification and filtering for removal of sodium ions.

According to the alternative 2, calcium is added appropriately in the form of calcium carbonate, although the filter cake must then be washed with an acid capable of forming a soluble calcium salt, e.g. sulphur-dioxide water, so that free calcium-ions are available for ion-exchange with sodium. It is necessary to carry out the washing process in a manner such that the lignin filter-cake will have a pH of beneath 9, preferably a pH of 7-9.

In the case of alternative 3, the calcium compound will preferably be a water-soluble salt, such as chloride, hydrogen sulphite or acetate, and the pH should lie between 7-9, also in this case.

Alternatives 4 and 5 require the provision of appropriate and effective mixing apparatus, although the lignin filter-cake must also be washed with an acid down to a low pH, suitably beneath pH 5, so as to remove sodium and replace the sodium with protons.

As beforementioned, the substitution of sodium in the lignin with calcium will result in an ash of higher melting point. However, depending on the combustion plant in which the fuel is burned, this may not at times be sufficient to avoid the problem of the formation of deposit in the combustion plant.

In such cases, the properties of the ash can be adjusted still further, by adding an acid component. Acid components which are suitable in these instances include kaolin, silica, aluminium oxide and slag, and also ash which has an acid nature. The melting point of the ash can be raised sufficiently, by introducing components such as these into the system, for instance by admixing the acid component with the filter-cake slurry obtained subsequent to filtration.

The invention will now be illustrated in more detail with reference to a number of preferred embodiments thereof described below.

### Embodiment 1

Black liquor obtained in a sulphate pulp process is evaporated or diluted, as necessary, to a consistency suitable for the process, whereafter gaseous carbon dioxide is introduced into the liquor, in order to precipitate the lignin content thereof. The liquor is then allowed to mature in a separate container, preferably while stirring the liquor, whereafter the liquor and the lignin flocculated therein is passed to a filtration plant.

The filtration plant will preferably include a belt-filter device comprising a filter belt the upper run of which is moved in a given direction. Suction boxes, or a system of suction boxes are, or is, disposed beneath the upper run of the filter-belt. In order to achieve the best possible effect, filtration is effected under a partial vacuum, and preferably with well separated filtering and washing zones.

The black liquor together with the flocculated lignin is supplied to the beginning of the filter belt up-stream of the first suction box. The belt is driven at a slow speed, and the black liquor and its residual chemical content will be drawn through the filter belt and into the suction box, from where it is returned to the chemical recovery process of the system. The lignin flocs are unable to pass through the filter belt, and consequently remain on the belt in the form of a filter cake. The lignin, however, will nevertheless still contain residues of black liquor, and the sodium content of the lignin, in industrial processes of this kind, will normally be in the region of 4% by weight, and is bound substantially to acid groups in the lignin.

As the filter belt moves, the continuously formed filter cake is advanced to the next suction box, or system of suction boxes, i.e. the washing zone. Washing water is delivered to the filter cake, through wash boxes.

When the sodium content of the filtrate on the belt is to be substituted with calcium by ion-exchange in accordance with alternative 5 above, an acid or a salt is supplied to an appropriate washing box, for the application of ion-exchange liquid. The ion-exchange method enables the pH and sodium and calcium contents respectively of the filter cake to be adjusted to desired levels. Final washing of the filter cake is always effected with water from the last wash box in line.

This process results in a reduction of the sodium content, and it is possible to achieve a lignin sodium-content as low as 0.1% by weight, while introducing calcium into the lignin at the same time, therewith enabling a calcium content of 6% by weight to be readily achieved. A typical final pH-value is 8-9, which is suitably achieved by adjusting the pH of the washing liquid with SO₂-water for instance.

According to this embodiment, kaolin or a similar ash-improving additive can be added to the system, either to the lignin slurry prior to filtration or to the lignin filter-cake subsequent to filtration. The amount of kaolin added will preferably correspond to 5-30 % by weight, suitably 15% by weight of the ash of the ultimate lignin fuel.

### Embodiment 2

Dolomite, CaMg (CO₃)₂ is used instead of calcium chloride with substantially the same percentual content, and is particularly advantageous when burning the lignin preparation together with coal, where relatively large quantities of sulphur need to be taken up.

### Embodiment 3

A satisfactory result can also be achieved with calcium hydroxide. The washing-water solution then had the following composition:

| | |
|---|---|
| water | 95 % by weight |
| calcium hydroxide Ca(OH)₂ | 5 % by weight. |

In this case it is necessary to wash the filter cake with SO₂-water (1-10% concentration) to a pH beneath 9.

### Embodiment 4

Calcium carbonate is added to the precipitated lignin slurry upstream of the filter in an amount of 3-20% calculated on the lignin. The filter cake is washed with an acid washing water, suitably sulphur-dioxide water, down to a pH beneath 9, suitably 7-9.

### Embodiment 5

Calcium carbonate, corresponding to 3-20 % by weight of the lignin, together with kaolin, Corresponding to 0.4-3% of the lignin, is added to the lignin filter-cake washed in an acid environment, to a pH beneath 4.

The use of calcium carbonate provides a process which can be readily controlled and which will result in a preparation having the preferred properties: Low sodium content and a relatively high calcium content. Further advantages from a technical aspect of combustion can be obtained by adding kaolin, which provides improved ash properties.

Should calcium carbonate not be available for some reason or other, it is found that a satisfactory result can also be achieved with calcium hydroxide in accordance with embodiment 3 above. In certain instances, dolomite can replace or be used together with one of the other calcium Compounds mentioned, such as in embodiment 2 above.

As beforementioned, the kaolin used in accordance with embodiment 5 can be replaced with other acid components, such as silica, aluminium oxide and slag, and also ash which has an acid nature. The quantities in which such components are added are suitably established experimentally, such that the resultant component composition will be adapted to prevailing combustion conditions with respect to obtaining an ash having improved properties.

The sodium content can be best reduced with an acid washing stage to a pH of beneath 4 in the filter cake.

When the lignin is to be burned together with another sulphur-containing fuel, such as coal, it is appropriate to further increase the calcium content of the lignin. The calcium content of the lignin is, to some extent, proportional to the pH-value. In the case of basic lignin, the calcium is present in the form of Ca(OH)₂ up to a pH of 11, and then in a maximum concentration of 9% with a sodium content of 0.1%. At pH-values above 11, the calcium is bound to the lignin in the form of Ca OH⁺. Trials carried out on a lignin filter-cake having a pH of 12.4 showed that it is possible to bind 24.4% calcium in this latter form.

It is interesting to note that lignin in a highly acid form, i.e. having a very low pH, is also able to band a large quantity of calcium. Calcium is bound as Ca⁺⁺ or CaOH⁺, depending on the amount in which the calcium compound is present and its form, e.g. calcium carbonate or calcium hydroxide, and the final pH.

## Claims

1. A lignin preparation containing predominantly lignin and obtained by precipitation from black liquor which derives from an alkali delignification process, selected from the sulphate process, soda process or polysulphide process, **characterized** in that the original sodium content of the lignin has been reduced so as to be less than 2% by weight, calculated on the dry weight of the lignin, whereby the sodium removed from the lignin has been replaced with calcium, so that the calcium content of the lignin exceeds 2% by weight calculated on the dry weight of the lignin.

2. A lignin preparation according to Claim 1, **characterized** in that the original sodium content of the lignin has been reduced so as to be less than 1% by weight.

3. A lignin preparation according to Claim 1 or 2, **characterized** in that it contains acid components originating from kaolin, silicon dioxide, aluminium oxide, slag and ash of an acid nature.

4. A lignin preparation according to Claim 3, **characterized** in that its sintering temperature exceeds 1000°C.

5. A lignin preparation according to Claim 4, **characterized** in that its sintering temperature exceeds 1100°C.

6. A lignin preparation according to Claim 1, **characterized** in that the sodium content is less than 2.0% by weight and the calcium content is at least 3% by weight, calculated on the dry weight of the lignin.

7. A lignin preparation according to Claim 6, **characterized** in that the sodium content is 1.2-0.2% by weight, and the calcium content is at least 3% by weight, calculated on the dry weight of the lignin.

8. A lignin preparation according to Claim 3, **characterized** in that it includes an acid component in the form of kaolin in a quantity of 5-50% by weight, calculated on the ash obtained when burning the preparation.

9. A lignin preparation according to Claim 8, **characterized** in that it includes an acid component in the form of kaolin in a quantity of 5-30% by weight, calculated on the ash obtained when burning the preparation.

10. A lignin preparation according to Claim 9, **characterized** in that it includes an acid component in the form of kaolin in a quantity of 15% by weight.

11. A method for producing a lignin preparation in accordance with any one of Claims 1-10, which preparation contains lignin derived from an alkali delignification process, selected from the sulphate process, soda process or polysulphide process, in which lignin is extracted by precipitation from black liquor deriving from one of said processes and the lignin precipitate is separated from the black-liquor residue by filtration, **characterized** in that at least the major part of the sodium content of the lignin is removed by washing down to a pH beneath 9 with an acid, selected from sulphuric acid, residual acid from ClO₂-preparation or sulphur-dioxide water, capable of forming a soluble calcium salt, with the proviso that a calcium compound is added to the black liquor prior to or during said precipitation process, to the lignin precipitate, while washing the filter cake, subsequent to removal of the filtrate or the calcium compound is admixed with the lignin subsequent to the filtering and washing process, so as to replace the sodium removed from the lignin with calcium.

12. A method according to Claim 11, **characterized** in that said washing with an acid is conducted down to a pH of 7-9.

13. A method according to Claim 11 or 12, **characterized** in that the calcium compound is calcium carbonate.

14. A method according to Claim 11, **characterized** by washing the lignin with the acid down to a pH beneath pH 8, so as to remove sodium, and then adding the water-soluble calcium compound subsequent thereto.

15. A method according to Claim 11, **characterized** by washing the lignin down to a pH beneath 4, and subsequently admixing calcium carbonate with the slurried filter cake.

16. A method according to Claim 11, **characterized** by adding an acid compound containing silica, aluminium oxide, slag or ash of an acid nature, in addition to said calcium compound.

17. The use of the lignin preparation according to any one of Claims 1-10 as a fuel.

18. The use of the lignin preparation according to Claim 1 as fuel together with other sulphur-containing fuels, for the purpose of reducing the sulphur content of the ensuing flue gases.

## Patentansprüche

1. Ligninzubereitung, die überwiegend Lignin enthält und die durch Ausfällen aus Schwarzlauge erhalten ist, welche aus einem Alkali-Delignifizierungsverfahren stammt, das aus dem Sulfatverfahren, dem Sodaverfahren oder dem Polysulfidverfahren ausgewählt ist, dadurch **gekennzeichnet**, daß der ursprüngliche Natriumgehalt des Lignins reduziert worden ist, so daß er, auf Grundlage des Trockengewichts des Lignins berechnet, weniger als 2 Gew.-% beträgt, wodurch das aus dem Lignin entfernte Natrium durch Calcium ersetzt worden ist, so daß der Calciumgehalt des Lignins, auf Grundlage des Trockengewichts des Lignins berechnet, 2 Gew.-% übersteigt.

2. Ligninzubereitung nach Anspruch 1, dadurch **gekennzeichnet**, daß der ursprüngliche Natriumgehalt des Lignins reduziert worden ist, so daß er weniger als 1 Gew.-% beträgt.

3. Ligninzubereitung nach Anspruch 1 oder 2, dadurch **gekennzeichnet**, daß sie Säurekomponenten enthält, die von Kaolin, Siliciumdioxid, Aluminiumoxid, Asche und Schlacke mit sauren Eigenschaften herstammen.

4. Ligninzubereitung nach Anspruch 3, dadurch **gekennzeichnet**, daß ihre Sintertemperatur 1000°C übersteigt.

5. Ligninzubereitung nach Anspruch 4, dadurch **gekennzeichnet**, daß ihre Sintertemperatur 1100°C übersteigt.

6. Ligninzubereitung nach Anspruch 1, dadurch **gekennzeichnet**, daß der Natriumgehalt kleiner als 2,0 Gew.-% ist und der Calciumgehalt, auf Grundlage des Trockengewichts des Lignins berechnet, zumindest 3 Gew.-% ist.

7. Ligninzubereitung nach Anspruch 6, dadurch **gekennzeichnet**, daß der Natriumgehalt 1,2-0,2 Gew.-% ist und der Calciumgehalt, auf Grundlage des Trockengewichts des Lignins berechnet, zumindest 3 Gew.-% ist.

8. Ligninzubereitung nach Anspruch 3, dadurch **gekennzeichnet**, daß sie eine Säurekomponente in der Form von Kaolin in einer Menge von 5-50 Gew.-%, auf Grundlage der beim Verbrennen der Zubereitung erhaltenen Asche berechnet, enthält.

9. Ligninzubereitung nach Anspruch 8, dadurch **gekennzeichnet**, daß sie eine Säurekomponente in der Form von Kaolin in einer Menge von 5-30 Gew.-%, auf Grundlage der beim Verbrennen der Zubereitung erhaltenen Asche berechnet, enthält.

10. Ligninzubereitung nach Anspruch 9, dadurch **gekennzeichnet**, daß sie eine Säurekomponente in der Form von Kaolin in einer Menge von 15 Gew.-% enthält.

11. Verfahren zur Herstellung einer Ligninzubereitung gemäß einem der Ansprüche 1 bis 10, wobei die Zubereitung überwiegend Lignin enthält, das aus einem Alkali-Delignifizierungsverfahren stammt, das aus dem Sulfatverfahren, dem Sodaverfahren oder dem Polysulfidverfahren ausgewählt ist, bei dem Lignin durch Ausfällen aus Schwarzlauge, die aus einem der Verfahren stammt, extrahiert ist, und der Ligninniederschlag von dem Schwarzlaugenrückstand durch Filtration getrennt wird, dadurch **gekennzeichnet**, daß zumindest der Hauptteil des Natriumgehalts des Lignins durch Waschen mit einer Säure herunter auf einen pH-Wert unter 9 entfernt wird, wobei die Säure aus Schwefelsäure, Restsäure von der ClO₂-Herstellung oder wässriger Schwefeldioxilösung ausgewählt ist und ein lösliches Calciumsalz bilden kann unter der Bedingung, daß eine Calciumverbindung zu der Schwarzlauge vor oder während dem Ausfällungsverfahren, zu dem Ligninniederschlag oder während dem Waschen des Filterkuchens nachfolgend auf das Entfernen des Filtrats zugegeben wird, oder die Calciumverbindung wird mit dem Lignin nachfolgend auf den Filter- und Waschvorgang vermischt, so daß das von dem Lignin entfernte Natrium durch Calcium ersetzt wird.

12. Verfahren nach Anspruch 11, dadurch **gekennzeichnet**, daß das Waschen mit einer Säure herunter auf einen pH-Wert von 7-9 durchgeführt wird.

13. Verfahren nach Anspruch 11 oder 12, dadurch **gekennzeichnet**, daß die Calciumverbindung Calciumcarbonat ist.

14. Verfahren nach Anspruch 11, **gekennzeichnet** durch Waschen des Lignins mit der Säure herunter auf einen pH-Wert unter 8, so daß das Natrium entfernt wird, und dann durch nachfolgendes Hinzugeben der wasserlöslichen Calciumverbindung.

15. Verfahren nach Anspruch 11, **gekennzeichnet** durch Waschen des Lignins herunter auf einen pH-Wert unter 4, und durch nachfolgendes Vermischen von Calciumcarbonat mit dem aufgeschlämmten Filterkuchen.

16. Verfahren nach Anspruch 11, **gekennzeichnet** durch Hinzugeben einer Säureverbindung, die Siliciumdioxid, Aluminiumoxid, Schlacke oder Asche mit sauren Eigenschaften zusätzlich zu der Calciumverbindung enthält.

17. Verwendung der Ligninzubereitung nach einem der Ansprüche 1 bis 10 als ein Brennstoff.

18. Verwendung der Ligninzubereitung nach Anspruch 1 als Brennstoff zusammen mit anderen schwefelenthaltenden Brennstoffen zum Zweck der Reduzierung des Schwefelgehalts der sich ergebenden Rauchgase.

## Revendications

1. Préparation de lignine, contenant principalement de la lignine et obtenue par précipitation à partir de liqueur noire issue d'un procédé de délignification par un alcali, choisi parmi le procède' au sulfate, le procédé à la soude et le procédé au polysulfure, **caractérisée** en ce qu'on a réduit la teneur initiale en sodium de la lignine à une valeur inférieure à 2 % en poids, par rapport au poids à sec de la lignine, le sodium enlevé de la lignine ayant été remplacé par assez de calcium pour que la teneur en calcium de la lignine dépasse 2 % en poids, par rapport au poids à sec de la lignine.

2. Préparation de lignine conforme à la revendication 1, **caractérisée** en ce qu'on a réduit la teneur initiale en sodium de la lignine à une valeur inférieure à 1 % en poids.

3. Préparation de lignine conforme à la revendication 1 ou 2, **caractérisée** en ce qu'elle contient des composants acides provenant de kaolin, de dioxyde de silicium, d'oxyde d'aluminium, ou de scories ou de cendres de nature acide.

4. Préparation de lignine conforme à la revendication 3, **caractérisée** en ce que sa température d'agglomération dépasse 1000°C.

5. Préparation de lignine conforme à la revendication 4, **caractérisée** en ce que sa température d'agglomération dépasse 1100°C.

6. Préparation de lignine conforme à la revendication 1, **caractérisée** en ce que sa teneur en sodium vaut moins de 2,0 % en poids et sa teneur en calcium vaut au moins 3 % en poids, par rapport au poids à sec de la lignine.

7. Préparation de lignine conforme à la revendication 6, **caractérisée** en ce que sa teneur en sodium vaut de 1,2 à 0,2 % en poids et sa teneur en calcium vaut au moins 3 % en poids, par rapport au poids à sec de la lignine.

8. Préparation de lignine conforme à la revendication 3, **caractérisée** en ce qu'elle contient, en tant que composant acide, du kaolin en une proportion de 5 à 50 % en poids, par rapport aux cendres obtenues quand on fait brûler la préparation.

9. Préparation de lignine conforme à la revendication 8, **caractérisée** en ce qu'elle contient, en tant que composant acide, du kaolin en une proportion de 5 à 30 % en poids, par rapport aux cendres obtenues quand on fait brûler la préparation.

10. Préparation de lignine conforme à la revendication 9, **caractérisée** en ce qu'elle contient, en tant que composant acide, du kaolin en une proportion de 15 % en poids.

11. Procédé de production d'une préparation de lignine conforme à l'une des revendications 1 à 10, laquelle préparation contient de la lignine provenant d'un procédé de délignification par un alcali, choisi parmi le procédé au sulfate, le procédé à la soude et le procédé au polysulfure, dans lequel on extrait la lignine par précipitation à partir de la liqueur noire issue de l'un de ces procédés et on sépare par filtration le précipité de lignine d'avec la liqueur noire résiduelle, **caractérisé** en ce qu'on enlève au moins la majeure partie du sodium contenu dans la lignine, en lavant celle-ci, jusqu'à obtenir un pH inférieur à 9, avec un acide choisi parmi l'acide sulfurique, l'acide résiduel issu de la préparation de ClO₂ et une solution aqueuse de dioxyde de soufre, capable de former un sel soluble de calcium, sous réserve qu'on ajoute un composé de calcium à la liqueur noire, avant ou pendant ladite précipitation, ou au précipité de lignine, pendant le lavage du gâteau de filtration après l'élimination du filtrat, ou qu'on ajoute et mélange ce composé de calcium à la lignine après la filtration et le lavage, de façon à remplacer par du calcium le sodium enlevé de la lignine.

12. Procédé conforme à la revendication 11, **caractérisé** en ce qu'on effectue le lavage avec un acide jusqu'à obtenir un pH valant de 7 à 9.

13. Procédé conforme à la revendication 11 ou 12, **caractérisé** en ce que le composé de calcium est du carbonate de calcium.

14. Procédé conforme à la revendication 11, **caractérisé** en ce qu'on lave la lignine avec un acide jusqu'à obtenir un pH inférieur à 8, pour enlever le sodium, et après, on ajoute le composé hydrosoluble de calcium.

15. Procédé conforme à la revendication 11, **caractérisé** en ce qu'on lave la lignine jusqu'à obtenir un pH inférieur à 4, et ensuite, on ajoute et mélange du carbonate de calcium au gâteau de filtration que l'on a délayé.

16. Procédé conforme à la revendication 11, **caractérisé** en ce qu'on ajoute un composé acide contenant de la' silice, de l'oxyde d'aluminium, ou des scories ou des cendres de nature acide, en plus du composé de calcium.

17. Emploi d'une préparation de lignine conforme à l'une des revendications 1 à 10, comme combustible.

18. Emploi d'une préparation de lignine conforme à l'une des revendications 1 à 10, comme combustible, conjointement avec d'autres combustibles soufrés, dans le but de réduire la teneur en soufre des gaz de combustion émis.
